Europäisches Patentamt

European Patent Office

Office européen des brevets

(11) Numéro de publication: **0 424 197 A1**

## (12) DEMANDE DE BREVET EUROPEEN

(21) Numéro de dépôt: 90402652.3

(22) Date de dépôt: 26.09.90

(51) Int. Cl.⁵: **F16K 1/22**

(30) Priorité: 16.10.89 FR 8913496

(43) Date de publication de la demande:
24.04.91 Bulletin 91/17

(84) Etats contractants désignés:
DE GB IT

(71) Demandeur: **AUTOMOBILES PEUGEOT**
**75, avenue de la Grande Armée**
**F-75116 Paris(FR)**

Demandeur: **AUTOMOBILES CITROEN**
**62 Boulevard Victor-Hugo**
**F-92200 Neuilly-sur-Seine(FR)**

(72) Inventeur: **Laine, Gabriel**
**2, Allée de Savoie**
**F-78570 Andresy(FR)**

(74) Mandataire: **Durand, Yves Armand Louis et al**
**CABINET WEINSTEIN 20, Avenue de**
**Friedland**
**F-75008 Paris(FR)**

(54) Vanne à papillon perfectionnée.

(57) Cette vanne comprend un papillon (1) qui pivote dans un conduit (3) se composant de deux tronçons (3a, 3b) qui sont assemblés suivant un plan de joint transversal (P) passant par l'axe géométrique (O) de pivotement du papillon (1) et qui sont déxaxés d'une distance (x) suivant une direction perpendiculaire à l'axe (O) de façon à réaliser dans le plan (P) deux faces d'appui opposées (4, 5) pour respectivement les deux ailes (1a, 1b) du papillon (1) en position de fermeture de celui-ci.

La vanne à papillon selon cette invention peut être utilisée notamment dans les conduits d'admission d'air dans les moteurs de véhicule automobile.

Fig. 1

EP 0 424 197 A1

## VANNE À PAPILLON PERFECTIONNÉE.

La présente invention a essentiellement pour objet une vanne à papillon pouvant notamment équiper un conduit d'admission d'air ou de mélange gazeux dans un moteur à combustion par exemple.

Il est connu depuis longtemps, dans l'industrie automobile par exemple, de munir certains conduits d'un papillon pivotant sur un axe disposé transversalement au conduit et permettant le dosage de l'air ou du mélange gazeux passant dans ce conduit.

Généralement, lorsque le papillon est en position de fermeture et de butée sur la paroi interne du conduit, il se trouve dans une position inclinée suivant un angle d'environ 8 à 12° par rapport à un plan transversal au conduit de façon à obtenir une étanchéité correcte sans provoquer toutefois un coincement.

Cependant, l'étanchéité à la fermeture ne peut être obtenue que par des usinages précis du conduit et du papillon, ce qui est coûteux, et implique pratiquement que le conduit soit de section circulaire.

Par ailleurs, du fait de l'inclinaison du papillon en position de fermeture par rapport audit plan transversal, l'angle de pivotement du papillon et de passage d'air se trouve réduit, de sorte que la progressivité à l'ouverture du conduit et donc la sensibilité dans la montée en régime d'un moteur par exemple, sont réduites et limitées. Autrement dit, le conducteur du véhicule est privé du mouvement de pivotement du papillon suivant un angle compris entre la position inclinée de ce papillon et le plan transversal passant par l'axe dudit papillon.

La présente invention a donc pour but de remédier à ces inconvénients en proposant une vanne à papillon perfectionnée dont l'étanchéité aux gaz en position fermée du papillon ne pose plus de problèmes d'usinage et qui en outre permet d'obtenir un gain de progressivité du passage des gaz à l'ouverture du papillon par augmentation de l'angle de pivotement de ce papillon.

A cet effet, l'invention a pour objet, une vanne à papillon perfectionnée, pour notamment un conduit d'admission d'air ou de mélange gazeux dans un moteur à combustion par exemple, et du type comprenant un papillon pivotant sur un axe disposé transversalement au conduit, caractérisée en ce que ledit conduit se compose de deux tronçons qui sont assemblés suivant un plan de joint transversal passant par l'axe géométrique de pivotement du papillon et qui sont désaxés suivant une direction sensiblement perpendiculaire à cet axe de façon à réaliser dans ledit plan deux faces d'appui opposées pour respectivement les deux ailes du papillon en position de fermeture de celui-ci.

On comprend donc déjà, qu'en position de fermeture, le papillon ne sera plus incliné dans le conduit, mais se trouvera dans une position transversale au conduit ou orthogonale à son axe, de sorte que le conducteur d'un véhicule pourra avantageusement tirer avantage du pivotement du papillon, à l'ouverture, suivant un angle voisin de 90°.

Suivant une autre caractéristique de cette vanne à papillon, les deux ailes du papillon sont décalées perpendiculairement à leur plan moyen de façon que leurs faces opposées respectives coopérant avec les faces d'appui précitées soient dans un même plan confondu avec le plan de joint transversal précité et passant par l'axe géométrique de pivotement du papillon.

Selon encore une autre caractéristique de l'invention, les deux ailes du papillon sont constituées par des plaques semi-circulaires dont les bords diamétraux solidaires de l'axe de pivotement du papillon sont radialement écartés l'un de l'autre suivant une distance égale au désaxage des deux tronçons de conduit.

Mais d'autres caractéristiques et avantages de l'invention apparaîtront mieux dans la description détaillée qui suit et se réfère aux dessins annexés donnés uniquement à titre d'exemple et dans lesquels :

La figure 1 est une vue schématique et en coupe axiale d'une vanne à papillon conforme à cette invention.

La figure 2 est une vue en plan du papillon avec son axe de pivotement.

Suivant l'exemple de réalisation représenté sur les dessins, une vanne à papillon selon cette invention comprend essentiellement un papillon 1 dont l'axe de pivotement 2 est monté à rotation transversalement dans un conduit 3 qui se compose de deux tronçons de conduit 3a, 3b assemblés, par tout moyen approprié, suivant un plan de joint transversal P passant par l'axe géométrique de pivotement 0 du papillon 1.

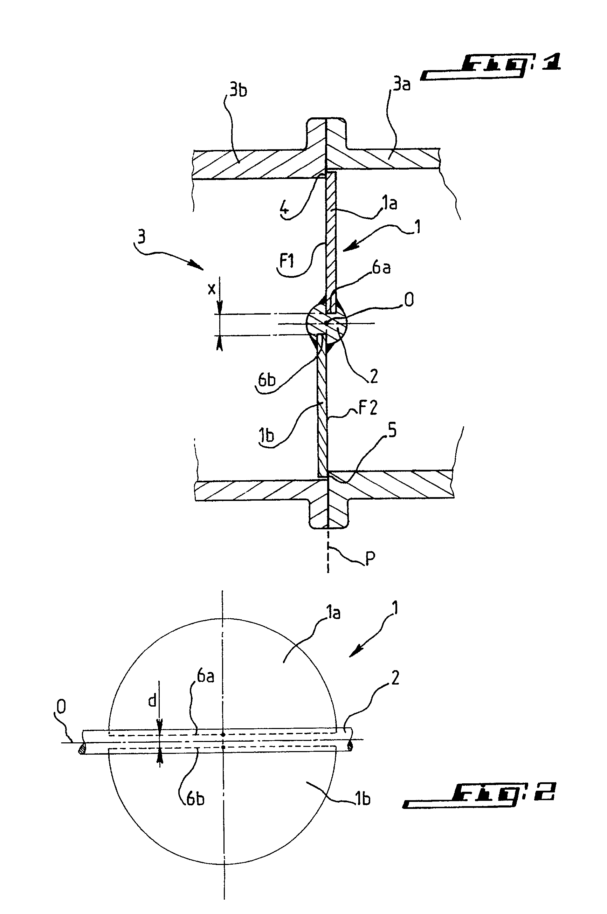

Comme on le voit bien sur la figure 1, les tronçons 3a, 3b sont désaxés d'une distance x suivant une direction sensiblement perpendiculaire à l'axe géométrique de pivotement 0, de manière à réaliser dans la plan P deux faces d'appui opposées 4, 5 pour respectivement les deux ailes 1a et 1b du papillon 1 en position de fermeture de ce papillon.

Plus précisément, et comme on le voit encore sur la figure 1, les faces d'appui opposées 4 et 5 sont réalisées par des décrochements dans le plan de joint P des deux tronçons de conduit 3a, 3b, au niveaux de la paroi interne de ces deux tronçons.

On observera ici qu'en position de fermeture, comme montré sur la figure 1, la face F1 de l'aile 1a du papillon 1 bute sur la face d'appui 4, tandis que la face opposée F2 de l'aile 1b du papillon 1 bute sur la face d'appui 5.

Les deux ailes 1a, 1b du papillon 1 sont, comme on le voit bien encore sur la figure 1, décalées perpendiculairement à leur plan moyen de façon que leurs faces opposées respectives précitées F1, F2, soient dans un même plan confondu avec le plan de joint transversal P et passant par l'axe géométrique 0 de pivotement du papillon 1.

En d'autres termes, les faces F1 et F2 en question sont coplanaires et situées dans le plan de joint transversal P des deux tronçons de conduit 3a et 3b.

Comme il apparaît clairement sur la figure 2, les deux ailes 1a et 1b du papillon 1 sont constituées, suivant l'exemple de réalisation représenté, par des plaques semi-circulaires, de même que la périphérie interne des tronçons de conduit 3a et 3b est circulaire en section transversale.

Les plaques semi-circculaires 1a et 1b constituant le papillon 1 possèdent des bords diamétraux 6a, 6b respectivement qui sont solidaires de l'axe 2 de pivotement du papillon 1, et cela par tout moyen approprié, tel que soudage par exemple.

Les bords diamétraux 6a, 6b des deux ailes 1a, 1b du papillon 1 sont radialement écartés l'un de l'autre suivant une distance d (figure 2) égale au désaxage x des deux tronçons de conduit 3a, 3b.

Partant de la position de fermeture du papillon visible sur la figure 1, on comprend qu'un conducteur de véhicule par exemple actionnant ce papillon, pourra le faire pivoter depuis la position transversale représentée jusqu'à une position sensiblement axiale (non représentée) pour permettre le passage des gaz dans le conduit 3, c'est-à-dire que le papillon pourra se débattre suivant un angle voisin de 90°. En d'autres termes, une bonne progressivité de l'ouverture du conduit 3 et donc une meilleure sensibilité dans la montée en régime du moteur pourront être obtenues, ce qui ne serait pas le cas si le papillon 1 avait, en position de fermeture, une position inclinée dans ledit conduit 3.

En outre, on comprend que l'étanchéité aux gaz, en position transversale de fermeture et d'appui du papillon 1 sur les faces d'appui 4 et 5 sera parfaite et facile à obtenir, lesdites faces d'appui ou décrochements 4 et 5 ne nécessitant pas un usinage particulier et précis des deux tronçons de conduit 3a et 3b, dont la section pourrait aisément, en variante, être elliptique ou rectangulaire, ainsi que le papillon associé.

On observera encore que la variation périphérique d'épaisseur de la paroi des tronçons 3a et 3b, permettant, suivant l'exemple de réalisation représenté sur la figure 1, de définir les faces d'appui 4 et 5, pourra être obtenue facilement par un usinage en excentrique de ces tronçons. Mais ces faces d'appui opposées 4 et 5 pourraient être obtenues de toute autre manière, sans sortir du cadre de l'invention.

L'invention n'est donc nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit.

## Revendications

1. Vanne à papillon perfectionnée, pour notamment un conduit d'admission d'air ou de mélange gazeux dans un moteur à combustion par exemple, et du type comprenant un papillon (1) pivotant sur un axe disposé transversalement au conduit (3), caractérisée en ce que ledit conduit se compose de deux tronçons (3a, 3b) qui sont assemblés suivant un plan de joint transversal (P) passant par l'axe géométrique (0) de pivotement du papillon (1) et qui sont désaxés (x) suivant une direction sensiblement perpendiculaire à cet axe de façon à réaliser dans ledit plan deux faces d'appui opposées (4, 5) pour respectivement les deux ailes (1a, 1b) du papillon (1) en position de fermeture de celui-ci.

2. Vanne à papillon selon la revendication 1, caractérisée en ce que les deux ailes (1a, 1b) du papillon (1) sont décalées perpendiculairement à leur plan moyen de façon que leurs faces opposées respectives (F1, F2) coopérant avec les faces d'appui précitées (4, 5) soient dans un même plan confondu avec le plan de joint transversal précité (P) et passant par l'axe géométrique (0) de pivotement du papillon (1).

3. Vanne à papillon selon la revendication 1 ou 2, caractérisée en ce que les deux ailes (1a, 1b) du papillon (1) sont constituées par des plaques semi-circulaires dont les bords diamétraux (6a, 6b) solidaires de l'axe de pivotement (2) du papillon (1) sont radialement écartés l'un de l'autre suivant une distance (d) égale au désaxage (x) des deux tronçons de conduit (3a, 3b).

Fig. 1

Fig. 2

4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-2427995 (STANDARD ELEKTRIK LORENZ) <br> * revendication 2; figure 1 * <br> --- | 1-3 | F16K1/22 |
| A | EP-A-110077 (VDO ADOLF SCHINDLING AG) <br> * abrégé * <br> --- | 1 | |
| A | US-A-4032108 (KINTNER) <br> * figure 2 * <br> ----- | 1 | |

|  |  |  | DOMAINES TECHNIQUES RECHERCHES (Int. Cl.5) |
|---|---|---|---|
|  |  |  | F16K <br> F02D <br> F02M |

Le présent rapport a été établi pour toutes les revendications

| Lieu de la recherche | Date d'achèvement de la recherche | Examinateur |
|---|---|---|
| BERLIN | 05 NOVEMBRE 1990 | SCHLABBACH M. |